# EUROPEAN PATENT APPLICATION

(11) **EP 2 796 236 A1**
(43) Date of publication of application: **29.10.2014**
(21) Application number: 12860916.1
(22) Date of filing: 20.08.2012
(51) Int. Cl.: B23K 3/06, B23K 1/00, F28D 7/02, B23K 101/14, B23K 103/12

(54) **METHOD FOR MANUFACTURING HEAT EXCHANGER AND HEAT EXCHANGER OBTAINED BY SAME**

(30) Priority: 22.12.2011 JP 2011281540
(71) Applicant: UACJ Copper Tube Corporation, Toyokawa-city Aichi 4411295 (JP)
(72) Inventor: NISHIMOTO, Yoshihiro, Aichi 441-1295 (JP); TORIYAMA, Osamu, Aichi 441-1295 (JP); IIJIMA, Izumi, Aichi 441-1295 (JP)
(74) Representative: Hamer, Christopher K.
(86) International application number: PCT/JP2012/070990
(87) International publication number: WO 2013/094249

(57) **Abstract**

Providing a method of producing a heat exchanger by joining a small-diameter refrigerant tube to a large-diameter water tube, wherein the water tube and the refrigerant tube are effectively joined together by suppressing reduction of the strength of the base materials, and preventing falling of a molten solder. In production of the heat exchanger composed of the large-diameter water tube and the small-diameter refrigerant tube joined to the outer circumferential surface of the water tube, a solder strip in the form of a band is used and assembled such that the solder strip is interposed between the outer circumferential surface of the water tube and the refrigerant tube, and then, a heating operation is performed at a temperature not higher than 350°C so as to melt the solder strip, whereby the water tube and the refrigerant tube are joined together.

## Description

### TECHNICAL FIELD

The present invention relates to a method of producing a heat exchanger and a heat exchanger produced by the method, and more particularly to a technique which permits advantageous production of a heat exchanger for a hot-water supply system obtained by winding a refrigerant tube around a water tube and joining these tubes together.

### BACKGROUND ART

There have been known heat exchangers each of which is composed of a large-diameter water tube an inside of which serves as a water passage, and a small-diameter refrigerant tube which has a smaller diameter than the water tube and an inside of which serves as a refrigerant passage, wherein the refrigerant tube is joined to the outer circumferential surface of the water tube. A heat exchanger for a hot-water supply system is one of the above-described heat exchangers, and is used in a configuration wherein the large-diameter water tube is bent in the form of a track or a spiral, and the small-diameter refrigerant tube or a plurality of the small-diameter refrigerant tubes is/are helically wound around the water tube and joined to the water tube.

In order to produce the above-described heat exchanger, Patent Document 1, for example, discloses a method in which after a small-diameter tube serving as the refrigerant passage is helically wound on an outer circumferential surface of a core tube serving as the water passage, at a predetermined pitch, the core tube is bent in the form of a spiral, and a brazing material is set in place, and brazing such as in-furnace brazing is performed. However, in the above-described production method including the steps of: winding the small-diameter tube around the core tube; bending the core tube; and performing the in-furnace brazing, the in-furnace brazing is performed at a temperature as high as 800°C, so that the temperatures of the core tube and the small-diameter tube as base materials are accordingly increased. As a result, the size of crystal grains is increased, and the materials are softened, whereby the strength of the materials are reduced, giving rise to an inherent problem of occurrence of leakage. Further, in the above-described production method, the in-furnace brazing is performed after the bending step, so that the core tube and the small-diameter tube are not yet joined together in the bending step. Accordingly, there arises a problem that the core tube is flattened in its bent portions, and a pressure loss on the side of the water passage is increased. Further, there is a potential problem that the small-diameter tube is separated from the core tube, and a gap is formed between the small-diameter tube and the core tube, so that joining of the tubes becomes difficult and a large thermal resistance is generated.

Patent Document 2 discloses a method of producing the heat exchanger, wherein after a small-diameter tube and a brazing material in the form of fine wire are simultaneously wound around a linear tube, the tubes and the brazing material are heated in a furnace so as to braze the small-diameter tube to the linear tube. Patent Document 3 discloses a method of producing the heat exchanger, wherein after a soldering material in the form of wire is wound around a core tube simultaneously with winding of a small-diameter tube around the core tube, the tubes and the soldering material are heated such that the temperatures of the base materials are not higher than 500°C so as to join together the core tube and the small-diameter tube. However, where the brazing or soldering material in the form of wire is wound around the linear tube or the core tube simultaneously with the small-diameter tube, gaps are necessarily formed between the brazing or soldering material in the form of wire and portions of contact between the small-diameter tube and the core tube or the linear tube, and the brazing or soldering material in the form of wire is placed on one side of the small-diameter tube. Accordingly, when the brazing or soldering material is melted by heating, the molten material unevenly exists in the above-described one side of the small-diameter tube, and the molten material cannot be sufficiently supplied to the portions of contact between the small-diameter tube and the core tube or the linear tube. Further, the molten material may fall down from the linear tube or the core tube before joining of the tubes. Accordingly, there are potential problems that effective joining of the small-diameter tube to the linear tube or the core tube is difficult, and in serious cases, gaps are formed between the small-diameter tube and the linear tube or the core tube, and unjoined portions are left.

### PRIOR ART DOCUMENTS

### PATENT DOCUMENTS

Patent Document 1: JP-A-2002-364989
Patent Document 2: JP-A-2011-92983
Patent Document 3: JP-A-2008-180460

### SUMMARY OF THE INVENTION

### TECHNICAL PROBLEM

The present invention was made in light of the background art described above. It is therefore a problem to be solved by the invention to provide a method of producing a heat exchanger by joining a small-diameter refrigerant tube an inside of which serves as a refrigerant passage, to a large-diameter water tube an inside of which serves as a water passage, wherein the tubes are joined together with a soldering material at a temperature lowered to permit effective suppression of reduction of the strength of the base materials, and the soldering material is applied in an improved manner to assure effective supply of the soldering material to joining portions of the tubes, while falling of a molten solder is advantageously prevented to effectively join together the water tube and the refrigerant tube. It is another problem to be solved by the present invention to provide a high-quality heat exchanger which is obtained by the above-described method and in which the tubes are joined together in a sound state.

### SOLUTION TO PROBLEMS

The above-described problem can be solved according to the principle of the present invention, which provides a method of producing a heat exchanger composed of: a water tube which has a large diameter and an inside of which serves as a water passage; and at least one refrigerant tube which has a smaller diameter than the water tube and an inside of which serves as a refrigerant passage, wherein the at least one refrigerant tube is joined to an outer circumferential surface of the water tube, the method being characterized in that the water tube and each of the at least one refrigerant tube are joined together by using a solder strip in the form of a band, by performing the steps of: assembling the water tube, the solder strip and each of the at least one refrigerant tube such that the solder strip is placed on the outer circumferential surface of the water tube, while each of the at least one refrigerant tube is placed on the solder strip; and performing a heating operation to heat the water tube, the solder strip and the at least one refrigerant tube at a temperature not higher than 350°C so as to melt the solder strip and join together the water tube and the at least one refrigerant tube.

According to one preferred form of the method of producing a heat exchanger of the present invention, the solder strip and each of the at least one refrigerant tube are assembled on the water tube by winding the solder strip on the outer circumferential surface of the water tube, and supplying each of the at least one refrigerant tube onto the solder strip before, during or after winding of the solder strip on the outer circumferential surface of the water tube.

According to a further preferred form of the present invention, the solder strip is formed by rolling a solder wire having a circular cross sectional shape such that the solder wire is flattened, and the formed solder strip is supplied to be placed on the outer circumferential surface of the water tube.

According to a yet further preferred form of the present invention, the above-described heating operation is performed by using flame so as to melt the solder strip, and a cooling operation is performed by blowing air after the water tube and the at least one refrigerant tube are joined together.

According to a still further preferred form of the present invention, the water tube is made of copper and the at least one refrigerant tube is made of a copper alloy, or the water tube has an outside diameter of 9.0-16.0mm, and each of the at least one refrigerant tube has an outside diameter of 2.0-5.0mm.

According to a further preferred form of the present invention, the solder strip is formed of an alloy consisting of 96.5% of Sn and 3.5% of Ag, or the solder strip has a width of 2.5-8.0mm and a thickness of 0.1-0.5mm.

According to a yet further preferred form of the present invention, the method of producing a heat exchanger further comprises a step of bending a joined member obtained by joining together the water tube and the at least one refrigerant tube, into the form of a spiral or a track.

The present invention also provides a heat exchanger produced by the above-described method.

### ADVANTAGEOUS EFFECTS OF THE INVENTION

In the method of producing the heat exchanger according to the present invention, the heating temperature for melting the solder strip so as to join together the water tube and the refrigerant tube is controlled such that the temperatures of the base materials are not excessively raised, whereby an increase of the size of the crystal grains can be prevented, and reduction of the strength of the refrigerant tube, in particular, can be effectively suppressed. In addition, the refrigerant tube is placed on the outer circumferential surface of the water tube such that the solder strip is interposed between the refrigerant tube and the water tube, and the solder strip is heated so as to be melted while it is interposed or held between the water tube and the refrigerant tube, so that a molten solder of the solder strip can be effectively supplied to joining portions of the water tube and the refrigerant tube, whereby the water tube and the refrigerant tube can be advantageously joined together. Further, falling of the molten solder of the solder strip can be effectively prevented, and the required amount of the solder can be advantageously reduced.

Further, the solder strip interposed between the water tube and the refrigerant tube can be formed so as to have a uniform thickness, so that a constant amount of the solder can be stably supplied to the joining portions of the water tube and the refrigerant tube, whereby the water tube and the refrigerant tube can be uniformly joined together with a minimum amount of the solder without wasting of the solder. Accordingly, joining of the refrigerant tube can be effectively performed at a reduced cost.

In the heat exchanger produced according to the present invention, uniform joining with the solder is realized at a reduced cost, and reduction of the strength of the refrigerant tube can be effectively suppressed or prevented.

### BRIEF DESCRIPTION OF THE DRAWINGS

Fig. 1 is a perspective view showing a step of winding refrigerant tubes and solder strips around a water tube in one example of a method of producing a heat exchanger according to the present invention;
Fig. 2 is an enlarged cross sectional view taken along a line II-II of Fig. 1;
Fig. 3 is a perspective view showing a step of forming the solder strips to be supplied on the water tube in Fig. 1, by a rolling operation;
Fig. 4 is an enlarged cross sectional view corresponding to that of Fig. 2, showing a sate wherein the solder strip is melted and the refrigerant tube is joined to the water tube; and

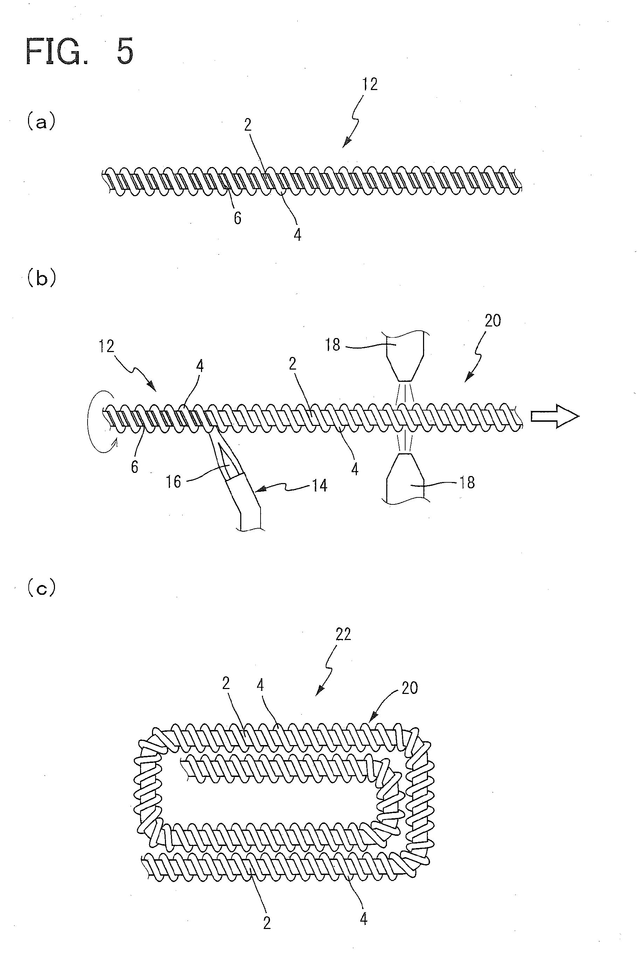

Figs. 5 are schematic views showing steps performed in one example of the method of producing the heat exchanger according to the present invention, in which Fig. 5(a) is an enlarged schematic plan view showing a state wherein the solder strip and the refrigerant tube are wound on an outer circumferential surface of the water tube, Fig. 5(b) is an enlarged schematic plan view showing the step of melting the solder strip by flame, and the step of cooling the tubes by air after the melting step, and Fig. 5(c) is a schematic plan view showing the step of bending a joined member obtained by joining the refrigerant tube to the water tube, into a spiral form to produce the intended heat exchanger.

### MODE FOR CARRYING OUT THE INVENTION

In production of a heat exchanger for a hot-water supply system, which uses carbon dioxide as a refrigerant and which is one of heat exchangers according to the present invention, it is well known to employ a method including the steps of: winding one refrigerant tube or a plurality of refrigerant tubes on an outer circumferential surface of a linear water tube; joining the refrigerant tube or tubes to the outer circumferential surface of the water tube; and bending the thus obtained joined member in the form of a spiral or a track. According to the present invention, the above-described step of winding each refrigerant tube on the outer circumferential surface of the linear water tube is performed by using a solder strip in the form of a band as a joining material.

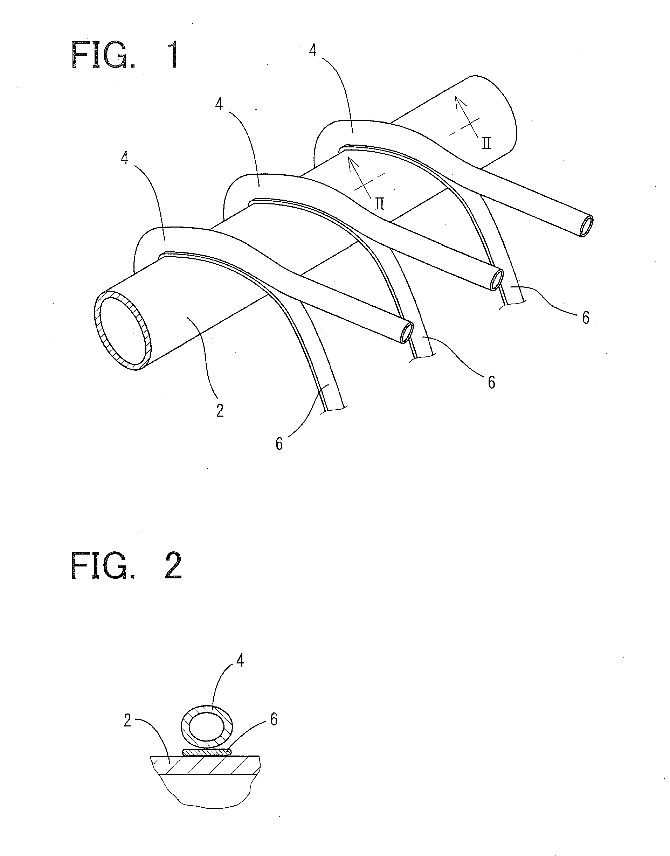

Described more specifically, a water tube 2 an inside of which serves as a water passage is a large-diameter linear tube, and at least one refrigerant tube 4, each of which has a smaller diameter than the water tube 2 and an inside of each of which serves as a refrigerant passage, is helically wound on the outer circumferential surface of the water tube 2. In this embodiment, three refrigerant tubes 4 are helically wound on the outer circumferential surface of the water tube 2. At this time, three solder strips 6 in the form of bands are supplied together with the refrigerant tubes 4, and the solder strips 6 and the refrigerant tubes 4 are wound on the outer circumferential surface of the water tube 2 such that each solder strip 6 and each refrigerant tube 4 are superposed on each other, as shown in Fig. 1. Namely, the solder strips 6 and the refrigerant tubes 4 are assembled on the water tube 2 such that each solder strip 6 is placed on the outer circumferential surface of the water tube 2, and the corresponding refrigerant tube 4 is placed on the solder strip 6, as shown in the enlarged view of Fig. 2.

As the materials of the water tube 2 and each refrigerant tube 4, known conventionally used metallic materials may be suitably employed. Generally, copper and copper alloy materials are advantageously used. Preferably, the water tube 2 is made of copper and the refrigerant tube 4 is made of a copper alloy. The sizes of the water tube 2 and the refrigerant tube 4 are selected within a conventional range. For example, the water tube 2 has an outside diameter of about 9.0-16.0mm, and the refrigerant tube 4 has an outside diameter of about 2.0-5.0mm. Further, various known processing operations may be performed on an inner surface of the water tube 2. For example, a number of grooves or protrusions may be formed in or on the inner surface of the water tube 2. The water tube 2 may be a so-called spiral tube having helical protrusions formed on its inner surface so as to correspond to helical grooves formed in its outer surface.

On the other hand, each solder strip 6 may be made of any known material as long as the material can be melted under a heating condition with a heating temperature not higher than 350°C, which will be described later. In the present invention, the solder strip 6 is advantageously made of a solder (melting point: 221°C) having an alloy composition of 96.5% of Sn and 3.5% of Ag on the weight basis. The solder strip 6 generally has a width of about 2.5-8.0mm, preferably about 3.0-6.0mm, and a thickness of about 0.1-0.5mm, preferably about 0.2-0.3mm. An excessively small width or thickness of the solder strip 6 makes it difficult to effectively join together the water tube 2 and the refrigerant tube 4. An excessively large width of the solder strip 6 causes wasting of the soldering material. An excessively large thickness of the solder strip 6 is undesirable since it tends to cause formation of gaps between the water tube 2 and the refrigerant tube 4.

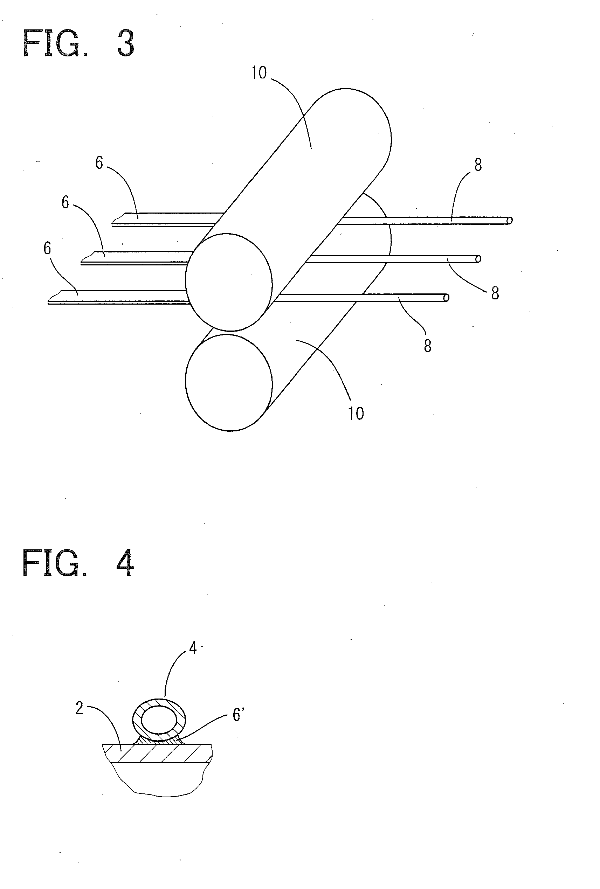

The refrigerant tubes 4 and the solder strips 6 may be supplied onto the water tube 2 by a method wherein rolls or coils of the refrigerant tubes 4 and the solder strips 6 are used as supply sources from which the refrigerant tubes 4 and the solder strips 6 are fed onto the water tube 2. Alternatively, the solder strips 6 may be preferably supplied onto the water tube 2 by a method wherein the solder strips 6 in the form of bands are obtained by rolling solder wires 8 having a circular cross sectional shape, with rolls 10, 10, such that the solder wires 8 are flattened as shown in Fig. 3, and the obtained solder strips 6 in the form bands are successively supplied onto the outer circumferential surface of the water tube 2. According to this method, the solder strips 6 in the form of bands can be easily obtained, and supply of a constant amount of the solder can be easily realized. By employing the method of forming the solder strips 6 by rolling, the solder strips 6 in the form of bands each of which having a width of about 3-6mm and a thickness of about 0.2-0.3mm can be easily obtained by rolling the solder wires 8 each of which having a diameter of 1.6mm, for example.

The solder strips 6 and the refrigerant tubes 4 may be wound on the outer circumferential surface of the water tube 2 by a method wherein the solder strips 6 and the refrigerant tubes 4 are simultaneously wound on the outer circumferential surface of the water tube 2. Further, it is possible to superpose each refrigerant tube 4 on each solder strip 6 before winding of the solder strip 6 on the outer circumferential surface of the water tube 2, and then wind the refrigerant tube 4 and the solder strip 6 superposed on each other on the outer circumferential surface of the water tube 2. Alternatively, the solder strips 6 and the refrigerant tubes 4 may be assembled on the water tube 2 by initially winding the solder strips 6 on the outer circumferential surface of the water tube 2, and then winding the refrigerant tubes 4 on the solder strips 6 wound on the outer circumferential surface of the water tube 2.

The thus obtained assembled member composed of the water tube 2, the solder strips 6 and the refrigerant tubes 4 is heated so as to melt the solder strips 6. At this time, the assembled member is heated such that the temperatures of the water tube 2 and the refrigerant tubes 4 as base materials are not excessively raised, namely, the temperatures of the base materials do not exceed 350°C, in order to prevent an increase of the size of crystal grains, and effectively suppress reduction of the strength of the refrigerant tubes 4 in particular, whereby the solder strips 6 are melted and the water tube 2 and the refrigerant tubes 4 are joined together. It is advantageous that a heating operation is locally performed by using flame of a torch or the like so as to melt the solder strips 6 by the flame and join together the water tube 2 and the refrigerant tubes 4, and then a cooling operation is performed by blowing air, for example. The water tube 2 and the refrigerant tubes 4 are joined together owing to melting of the solder strips 6 interposed between the water tube 2 and the refrigerant tubes 4, as described above. Therefore, although the assembled member is heated at a relatively low temperature as described above, the assembled member is required to be heated at a temperature higher than a temperature at which the solder strips 6 are melted. Practically, the assembled member is preferably heated such that the temperatures of the base materials are not lower than 250°C.

Owing to effective supply of a molten solder 6', the water tube 2 and each refrigerant tube 4 are surely and stably joined together with the molten solder 6', as shown in Fig. 4. Joining of the water tube 2 and the refrigerant tubes 4 is performed such that the temperatures of the base materials are not excessively raised. Therefore, reduction of the strength of the base materials, particularly reduction of the strength of the refrigerant tubes 4 can be effectively suppressed, and an excessive increase of the size of the crystal grains can be restricted or prevented, whereby corrosion of the base materials can be effectively prevented.

Further, the water tube 2 and the refrigerant tubes 4 are joined together by melting the solder strips 6 interposed between the water tube 2 and the refrigerant tubes 4, so that the molten solder surely exists in joining portions of the water tube 2 and the refrigerant tubes 4, whereby the water tube 2 and the refrigerant tubes 4 can be effectively joined together. Further, it is possible to effectively prevent problems such as falling of the molten solder and insufficient supply of the molten solder to joining interfaces between the water tube 2 and the refrigerant tubes 4, which problems would otherwise cause unsound joining of the water tube 2 and the refrigerant tubes 4.

In the case where the water tube 2 and the refrigerant tubes 4 are joined together by a conventional soldering method wherein the solder is applied by dipping so as to join together the water tube 2 and the refrigerant tubes 4, the solder is applied to the surfaces of the tubes in an unnecessarily large amount, resulting in wasting of the solder. On the other hand, in the case where the solder strips 6 are interposed between the water tube 2 and the refrigerant tubes 4, as in the present invention, the required amount of the solder used for joining the refrigerant tubes 4 to the water tube 2 can be minimized, whereby the production cost of the heat exchanger can be reduced.

Figs. 5 show one example of a method of producing the heat exchanger including the step of winding the refrigerant tube 4 and the step of performing the soldering operation described above.

Fig. 5(a) shows an assembled member 12 obtained by winding the solder strip 6 and the refrigerant tube 4 on the outer circumferential surface of the water tube 2, as shown in Fig. 1. The assembled member 12 can be obtained by supplying the solder strip 6 and the refrigerant tube 4 onto the outer circumferential surface of the water tube 2 such that the solder strip 6 and the refrigerant tube 4 are superposed on each other, while the water tube 2 is rotated about its axis and moved in its axial direction, for example.

The assembled member 12 is exposed to flame 16 generated by a torch 14 so as to be locally heated while the assembled member 12 is rotated about its axis and moved in its axial direction as shown in Fig. 5(b), whereby the solder strip 6 interposed between the outer circumferential surface of the water tube 2 and the refrigerant tube 4 is melted, and the water tube 2 and the refrigerant tube 4 are joined together with the molten solder. By heating the assembled member 12 with the flame 16 of the torch 14, the solder strip 6 having a relatively low melting point can be more effectively prevented from being melted and falling down before the temperatures of the water tube 2 and the refrigerant tube 4 reach a temperature at which the water tube 2 and the refrigerant tube 4 are joined together. After a joined member 20 is obtained by joining together the water tube 2 and the refrigerant tube 4 with the molten solder of the solder strip 6 melted with the flame 16, the water tube 2 and the refrigerant tube 4 are rapidly cooled by air blown from air-blow nozzles 18 disposed around the water tube 2 and the refrigerant tube 4, and the molten solder is solidified.

Then, the thus obtained joined member 20 composed of the water tube 2 and the refrigerant tube 4 is bent as in a conventional method, and used as a heat exchanger 22 in the form of a spiral or a track shown in Fig. 5(c). The joined member 20 is obtained by the above-described winding step and soldering step wherein the molten solder is surely supplied between the water tube 2 and the refrigerant tube 4, so that the water tube 2 and the refrigerant tube 4 are surely joined together over a sufficiently large area without causing defects such as formation of gaps. Therefore, in the bending operation of the joined member 20, occurrence of problems such as formation of gaps between the water tube 2 and the refrigerant tube 4 can be advantageously prevented even in corner portions of the joined member 20 in which it is bent by a large amount.

Although a typical embodiment of this invention has been described for illustrative purpose only, it is to be understood that this invention is not limited to the details of the illustrated embodiment.

For example, the illustrated embodiment applies to the heat exchanger for the hot-water supply system, but this invention is not limited to such a heat exchanger, and can be applied to various other known types of heat exchangers.

Further, various known structures or configurations may be employed, such as a configuration wherein the above-described bending step is not performed so that the water tube 2 takes the form of a linear tube, depending on the type of the intended heat exchanger.

Although the illustrated embodiment applies to the heat exchanger wherein the water tube 2 and the refrigerant tube 4 are joined together such that the refrigerant tube 4 is wound on the outer circumferential surface of the water tube 2, this invention can also apply to a heat exchanger wherein the water tube 2 and the refrigerant tube 4 are joined together such that the refrigerant tube 4 is disposed on the outer circumferential surface of the water tube 2 so as to extend in parallel with the axis of the water tube 2.

It is to be understood that this invention can be embodied with various other changes, modifications and improvements, which are not described herein and which may occur to those skilled in the art without departing from the spirit and scope of the invention, and that such changes, modifications or improvements are also within the scope of this invention.

### NOMENCLATURE OF REFERENCE SIGNS

| | | | |
|---|---|---|---|
| 2: | Water tube | 4: | Refrigerant tube |
| 6: | Solder strip | 6': | Solder |
| 8: | Solder wire | 10: | Roll |
| 12: | Assembled member | 14: | Torch |
| 16: | Flame | 18: | Air-blow nozzle |
| 20: | Joined member | 22: | Heat exchanger |

## Claims

1. A method of producing a heat exchanger composed of: a water tube which has a large diameter and an inside of which serves as a water passage; and at least one refrigerant tube which has a smaller diameter than the water tube and an inside of which serves as a refrigerant passage, wherein the at least one refrigerant tube is joined to an outer circumferential surface of the water tube, the method being **characterized in that** the water tube and each of the at least one refrigerant tube are joined together by using a solder strip in the form of a band, by performing the steps of:
assembling the water tube, the solder strip and each of the at least one refrigerant tube such that the solder strip is placed on the outer circumferential surface of the water tube, while each of the at least one refrigerant tube is placed on the solder strip; and
performing a heating operation to heat the water tube, the solder strip and the at least one refrigerant tube at a temperature not higher than 350°C so as to melt the solder strip and join together the water tube and the at least one refrigerant tube.

2. The method of producing a heat exchanger according to claim 1, wherein the solder strip and each of the at least one refrigerant tube are assembled on the water tube by winding the solder strip on the outer circumferential surface of the water tube, and supplying each of the at least one refrigerant tube onto the solder strip before, during or after winding of the solder strip on the outer circumferential surface of the water tube.

3. The method of producing a heat exchanger according to claim 1 or 2, wherein the solder strip is formed by rolling a solder wire having a circular cross sectional shape such that the solder wire is flattened, and the formed solder strip is supplied to be placed on the outer circumferential surface of the water tube.

4. The method of producing a heat exchanger according to any one of claims 1 to 3, wherein said heating operation is performed by using flame so as to melt the solder strip, and a cooling operation is performed by blowing air after the water tube and the at least one refrigerant tube are joined together.

5. The method of producing a heat exchanger according to any one of claims 1 to 4, wherein the water tube is made of copper and the at least one refrigerant tube is made of a copper alloy.

6. The method of producing a heat exchanger according to any one of claims 1 to 5, wherein the solder strip is formed of an alloy consisting of 96.5% of Sn and 3.5% of Ag.

7. The method of producing a heat exchanger according to any one of claims 1 to 6, wherein the water tube has an outside diameter of 9.0-16.0mm, and each of the at least one refrigerant tube has an outside diameter of 2.0-5.0mm.

8. The method of producing a heat exchanger according to any one of claims 1 to 7, wherein the solder strip has a width of 2.5-8.0mm and a thickness of 0.1-0.5mm.

9. The method of producing a heat exchanger according to any one of claims 1 to 8, further comprising a step of bending a joined member obtained by joining together the water tube and the at least one refrigerant tube, into the form of a spiral or a track.

10. A heat exchanger produced by a method according to any one of claims 1 to 9.
